# FASCICULE DE BREVET EUROPEEN

(11) **EP 3 294 612 B1**
(45) Date de publication et mention de la délivrance du brevet: **02.10.2019**
(21) Numéro de dépôt: 16726358.1
(22) Date de dépôt: 03.05.2016
(51) Int. Cl.: B62D 25/06, B60J 7/043

(54) **PAVILLON STRUCTUREL, ET VÉHICULE ÉQUIPÉ D'UN TEL PAVILLON.**
STRUKTURDACH UND FAHRZEUG MIT SOLCH EINEM DACH
STRUCTURAL ROOF AND VEHICLE PROVIDED WITH SUCH A ROOF

(30) Priorité: 12.05.2015 FR 1554266
(43) Date de publication de la demande: 21.03.2018
(73) Titulaire: Renault S.A.S., 92100 Boulogne-Billancourt (FR)
(72) Inventeur: HEWAK, Gregor, 95490 Vaureal (FR); POTIER, Jean Francois, 91120 Palaiseau (FR)
(86) Numéro de dépôt international: PCT/FR2016/051040
(87) Numéro de publication internationale: WO 2016/181055

(56) Documents cités:
- EP-A1- 2 154 015
- WO-A1-2011/015256
- US-A1- 2010 038 933
- US-A1- 2012 061 997

## Description

La présente invention se rapporte de manière générale au domaine de l'automobile, et concerne plus précisément un pavillon structurel, ainsi qu'un véhicule équipé d'un tel pavillon, tel que connu du document EP 2154015 A.

Dans la plupart des véhicules automobiles, la caisse est constituée d'une superstructure formant une cellule de protection des occupants et d'un soubassement sur lequel sont rapportés des éléments de la chaine de traction, tels un moteur et un mécanisme d'entraînement des roues.

La partie supérieure de la superstructure se compose traditionnellement d'un pavillon de toit réalisé à partir d'une tôle d'acier.

Afin de réaliser un habitacle baigné d'une luminosité accrue, la partie supérieure de la superstructure peut être réalisée en partie en matériau translucide, comme cela est le cas pour un véhicule équipé d'un toit ouvrant en verre ou d'un toit panoramique en verre.

Afin d'améliorer encore plus la luminosité, la partie translucide se doit d'être une surface élevée. Dans ce but, il est connu des véhicules ayant un toit panoramique en verre dont la caisse est dépourvue d'une traverse centrale de liaison des pieds milieu.

Afin de ne pas dégrader la tenue à l'effort de la caisse en cas de choc, la superstructure est calibrée de telle sorte que les côtés de caisse du véhicule comprennent des brancards latéraux de toit, formé par un assemblage d'une doublure de brancard et d'une structure de brancard.

Un tel assemblage forme une poutre de section fermée qui est reliée en son extrémité avant à une structure d'encadrement de baie composée en partie d'un montant de baie et d'une traverse avant de pavillon, en son extrémité arrière à une traverse arrière de pavillon.

Contrairement au pavillon de toit réalisé à partir d'une tôle d'acier, la structure de caisse d'un véhicule pourvu d'un toit panoramique en verre est dépourvue d'une traverse centrale permettant de mettre en liaison mécanique les brancards de toit. La répartition des efforts d'un choc au reste de la superstructure passe ainsi par une conception modifiée des autres traverses de toit, que sont les traverses avant et arrière de pavillon mais aussi une augmentation de la section des brancards latéraux de toit.

Les bords latéraux du pavillon sont ainsi bornés par les brancards de sorte que la partie translucide du pavillon est assujettie à la dimension des brancards.

En outre, un autre inconvénient réside dans l'aspect règlementaire qui, selon le pays concernés, interdit tout recours à un matériau autre que l'acier dans une zone du pavillon située sensiblement verticalement au droit des occupants du véhicule.

Un des buts de l'invention est de remédier en partie à ces inconvénients afin d'améliorer la luminosité dans l'habitacle.

Pour ce faire, l'objet de l'invention a trait à un pavillon structurel d'un véhicule du type d'une automobile, comportant au moins une pièce avant de carrosserie et une pièce arrière de carrosserie qui sont aptes à coopérer respectivement avec un cadre supérieur d'une structure de caisse.

Selon l'invention au moins l'une desdites pièces avant et arrière de carrosserie est reliée à au moins l'autre d'entre lesdites pièces avant et arrière de carrosserie par l'intermédiaire de deux brancards, chacun des brancards étant déporté transversalement d'une distance D d'un bord latéral desdites pièces de carrosserie vers un bord latéral opposé, de sorte que le pavillon structurel forme un ensemble modulaire apte à être rapporté d'un seul tenant sur le cadre supérieur d'une structure de caisse.

Avantageusement, un tel pavillon permet un transfert des efforts longitudinaux de la pièce avant de carrosserie vers la pièce arrière de carrosserie du pavillon, de telle sorte qu'en cas de choc frontal du véhicule contre un obstacle, les efforts du choc circulent au travers des brancards latéraux de pavillon et au travers du brancard déporté. Compte tenu de cette répartition des efforts, les brancards latéraux peuvent être de dimension réduite comparativement aux brancards traditionnel. A iso-dimension du véhicule, une telle réduction permet d'augmenter l'écart transversal entre les brancards latéraux. Dans le cas d'un toit transparent, une telle augmentation s'accompagne d'une luminosité accrue.

Du fait du décalage en retrait transversal du brancard déporté par rapport au cadre supérieur de la structure de caisse du véhicule, le brancard déporté est de préférence disposé verticalement au droit des sièges avant et latéraux arrière. Avantageusement, les brancards déportés s'étendent longitudinalement entre les traverses avant et arrière du cadre supérieur de la structure de caisse, et de manière sensiblement vertical au droit du conducteur, du passager avant et des passagers arrière occupant les sièges latéraux. Cela permet de répondre avantageusement à des normes de sécurité qui impose le respect d'une telle architecture de conception d'un véhicule.

Selon le pavillon structurel de l'invention, chacune des première et seconde pièces de carrosserie comprend au moins une embase de fixation reliée à au moins un brancard déporté. Une telle conception permet d'adapter la nature des matériaux utilisés à la fabrication des pièces avant et arrière de carrosserie et du brancard déporté selon leur résistance aux efforts.

Selon une variante de réalisation, le pavillon structurel peut être réalisé en matériau composite de sorte que l'ensemble modulaire est venu de matière d'un seul tenant par moulage. Le choix d'un matériau composite en fibre de carbone par exemple, peut permettre d'alléger le pavillon de toit, donc la structure de caisse du véhicule comportant un tel pavillon structurel, tout en maintenant un degré élevé de résistance à la déformation et de transmission des efforts d'un choc au reste de la structure du véhicule.

Le pavillon structurel peut comprendre un panneau translucide au moins en tout ou partie, s'étendant longitudinalement entre lesdites première et seconde pièces de carrosserie ce qui permet à la lumière extérieure de pénétrer généreusement à l'intérieur de l'habitacle du véhicule via une ouverture lumineuse relativement spacieuse au regard des solutions antérieures connues. Ici, l'ouverture de toit est de forme sensiblement rectangulaire, et assujettie à la fois à l'écart longitudinal entre les pièces avant et arrière de carrosserie et à l'écart transversal entre les brancards de pavillon alors de dimension réduite du fait de la présence des brancards déportés.

De manière préférentielle, le pavillon structurel peut comprendre un panneau qui soit réalisé en matière plastique ce qui tend vers un allègement du pavillon.

Les première et seconde pièces de carrosserie dudit pavillon structurel peuvent comprendre une bride de fixation contre laquelle le panneau translucide vient en appui. Un tel agencement permet avantageusement de faciliter l'assemblage des pièces entre elles, voire même leur étanchéité mutuelle.

Le panneau translucide dudit pavillon structurel peut comprendre des bords tombant incurvés et conformés afin de recouvrir lesdits brancards latéraux de pavillon. L'absence de pièce intermédiaire entre le panneau transparent et les brancards de pavillon permet une ouverture en transversal augmentée, améliorant d'autant la luminosité à l'intérieur de l'habitacle ainsi qu'un assemblage de conception simple et rapide dans sa mise en oeuvre.

Le panneau translucide du pavillon structurel peut comprendre selon une variante de réalisation au moins une vitre latérale prolongeant les bords tombant ce qui permet d'obtenir une continuité de ligne entre une partie sommitale du toit et une partie latérale du côté de caisse comportant une vitre latérale.

La vitre du panneau translucide peut être une vitre de custode arrière. Préférentiellement, le panneau translucide comprend deux vitres latérales de custode de sorte qu'il est sensiblement de forme en U inversé selon une coupe transversale de plan Y-Z.

L'invention concerne aussi un véhicule du type d'une automobile, qui comprend une structure de caisse définissant un cadre supérieur de toit sur lequel est monté un pavillon structurel comportant au moins l'une quelconque des caractéristiques susmentionnées.

Le cadre supérieur de toit du véhicule peut comprendre au moins une traverse avant ou arrière de pavillon contre laquelle au moins l'une d'entre les première et seconde pièces de carrosserie est fixée par soudage. Un tel soudage permet de réaliser une fixation rigide du pavillon structurel à la structure de caisse du véhicule de telle sorte qu'en cas de choc frontal du véhicule contre un obstacle, l'effort du choc passant au travers du montant de baie et de la traverse supérieure de baie, formant également ladite traverse avant de pavillon, est réparti de manière homogène au reste de la structure de caisse via les brancards latéraux de pavillon et les brancards déportés de pavillon structurel.

Le cadre supérieur de toit du véhicule peut comprendre au moins des brancards latéraux qui comportent respectivement au moins une bride de fixation contre laquelle le panneau est fixé par un cordon de colle de telle manière que le panneau vient à recouvrement par l'extérieur de chacun des brancards latéraux de pavillon. Une telle conception permet d'améliorer la qualité perçue du véhicule puisque le panneau du pavillon structurel recouvre par l'extérieur chacun des côtés de caisse du véhicule. Selon une variante de réalisation, les parties du panneau translucide montées à recouvrement des pièces de structure sont rendues opaques afin de masquer la structure de caisse. Le masque peut être un élément dédié rapporté et collé, ou bien une teinte réalisée directement dans la masse du panneau translucide, dans des zones appropriées.

Le cadre supérieur de toit du véhicule peut comprendre au moins des pièces latérales de carrosserie formant un côté de caisse délimitant un encadrement de vitre recouvert par le panneau.

Le cadre supérieur de toit du véhicule peut comprendre au moins un renfort de custode, reliant le côté de caisse à la traverse arrière de pavillon, recouvert par le pavillon structurel.

Le véhicule comprend un montant latéral de pare-brise prolongeant longitudinalement vers l'avant un brancard latéral de pavillon, le montant latéral étant recouvert en partie par un bord tombant dudit panneau.

Bien entendu, d'autres caractéristiques et avantages apparaîtront à la lecture des modes de réalisation décrits en référence aux figures, donnés à titre d'exemples non limitatifs, dans lesquelles :
- la **figure 1** représente de manière schématique et selon une vue en perspective de l'extérieur, une partie supérieure d'un véhicule automobile comportant le pavillon structurel de l'invention,
- la **figure 2** représente de manière schématique et selon une vue en perspective, une variante de réalisation du pavillon structurel de la figure 1, selon l'invention,
- la **figure 3** représente de manière schématique et selon une vue en perspective de l'intérieur, le pavillon structurel de la figure 2 monté sur quelques éléments de structure de caisse du véhicule,
- la **figure 4** est une vue de l'extérieur, représentant une perspective éclatée du pavillon structurel de la figure 3,
- la **figure 5** est un agrandissement selon une coupe longitudinale de la partie avant du pavillon structurel sur la structure de caisse du véhicule, selon l'invention,
- la **figure 6** est un agrandissement selon une coupe longitudinale au véhicule, de la partie avant du pavillon structurel monté sur la structure de caisse du véhicule, selon une variante de réalisation de l'invention,
- la **figure 7** est un agrandissement selon une coupe transversale au véhicule, de la partie avant du pavillon structurel monté sur la structure de caisse du véhicule, selon l'invention,
- la **figure 8** représente de manière schématique et selon une vue en perspective de l'extérieur, une partie supérieure d'un véhicule automobile pourvue d'une variante de réalisation d'un panneau translucide du pavillon structurel, selon l'invention.

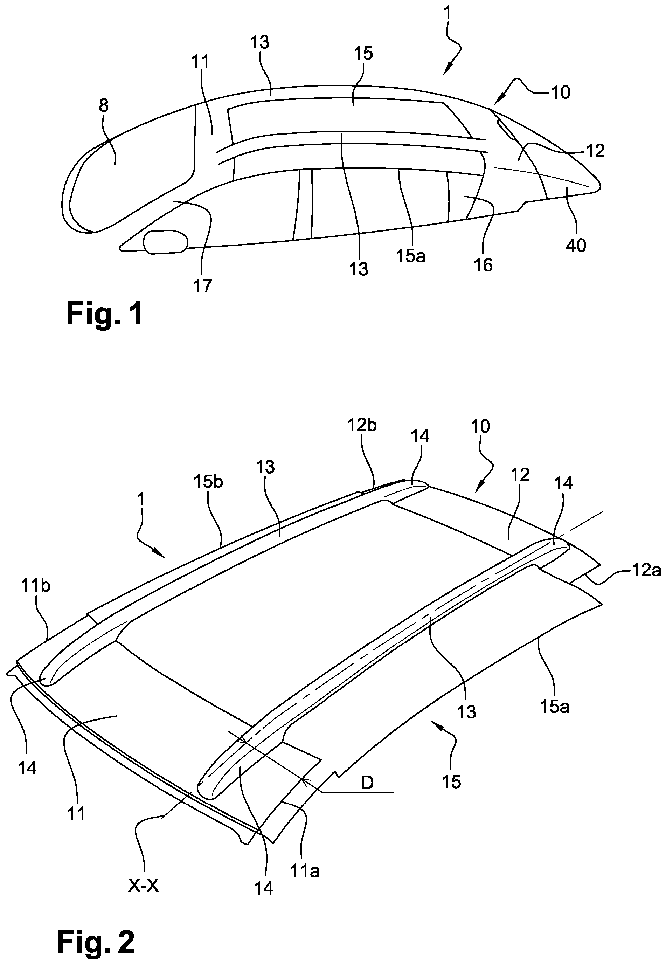

La description des figures 1 à 8 contient les termes « avant », « arrière », « latéraux » qui sont données selon un sens d'avancement normal du véhicule. En outre, l'axe longitudinal au véhicule est l'axe X qui relie l'avant à l'arrière du véhicule, l'axe transversal au véhicule est l'axe Y qui relie les côtés latéraux l'un à l'autre et l'axe vertical au véhicule est nommé l'axe Z dans ce qui suit.

Sur la figure 1 est représenté la partie supérieure d'un véhicule du type d'une automobile qui se distingue par un pare-brise 8 encadré partiellement par des montant de baie 17, l'ensemble étant visible sur la gauche de la figure 1. Sur la droite de la figure 1, une lunette arrière 40 s'étend vers le bas de telle sorte qu'elle prolonge la partie sommitale du véhicule équipée d'un pavillon structurel 1.

Ledit pavillon structurel se distingue par une présence et une disposition toute particulière de barres longitudinales qui s'étendent entre le pare-brise 8 et la lunette arrière 40.

Les parties d'extrémité avant et arrière de chacune des barres prolongent respectivement le pare-brise 8 vers l'arrière et la lunette arrière 40 par l'avant. Pour ce faire, des première et seconde pièces de carrosserie 11 et 12 sont reliées auxdites extrémités avant et arrière des barres longitudinales.

Les barres longitudinales participent à la rigidification de la structure de caisse, plus particulièrement du cadre supérieur délimitant une ouverture du pavillon. Le cadre supérieur est formé par des traverses avant 2 et arrière 3 de pavillon mutuellement reliées l'une à l'autre au moyen des brancards latéraux 6 et des barres longitudinales.

Ces dernières s'étendent sensiblement de manière parallèle auxdits brancards latéraux selon un retrait vers l'intérieur du véhicule, de sorte qu'elles sont qualifiées par la suite de brancards déportés 13.

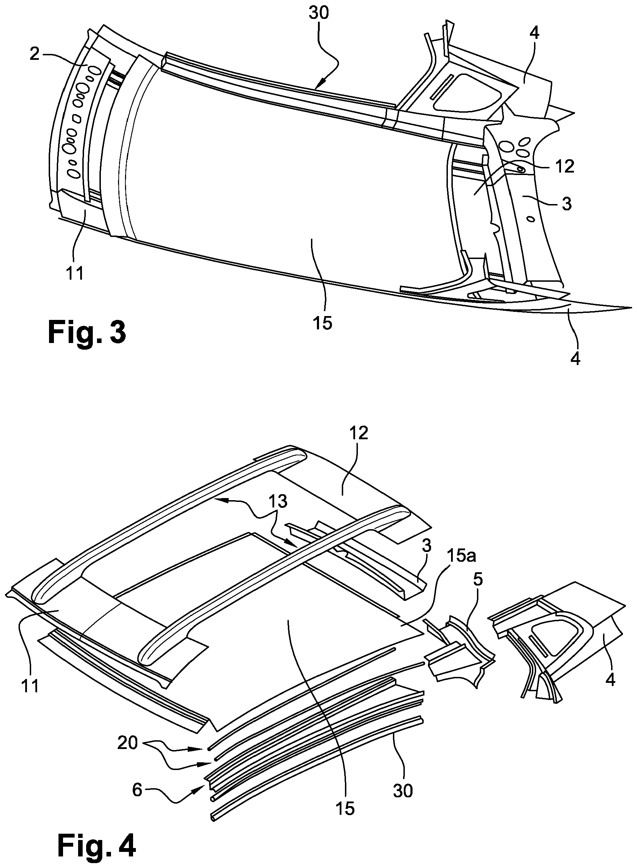

Les brancards déportés 13 assurent à l'identique des brancards latéraux 6, une liaison entre des montants latéraux 17 de pare-brise 8 et une doublure de custode 4 arrière, via un renfort 5 de custode arrière, visibles sur la figure 4.

Les pièces avant 11 et arrière 12 de carrosserie coiffent respectivement les traverses avant 2 et arrière 3 du cadre supérieur de la structure de caisse comme cela est rendu visible sur la figure 3.

Les bords latéraux 11a et 11b de la pièce avant 11 sont transversalement disposés en saillie hors des brancards 13 déportés, d'une distance D prise entre un bord 11a ou 11b latéral et l'axe longitudinal X-X le long duquel s'étend l'un des brancards longitudinaux 13.

Du fait de la distance D entre le bord 11a, 11b et un brancard longitudinal 13, chacun des brancards déportés s'étend perpendiculairement au droit des sièges latéraux du véhicule. Ainsi la tête du conducteur d'un des sièges gauche ou droit du véhicule est protégée de l'extérieur par la présence du brancard déporté 13. Il en va de même des passagers avant et arrière prenant place sur les sièges jouxtant directement un encadrement de porte.

Chaque brancard 6 latéral est ainsi associé à un brancard 13 déporté de telle sorte que les efforts transitant dans la partie supérieure de la structure de caisse sont répartis entre les différents brancards 6 et 13. Il résulte de cette conception en doublon des brancards, une optimisation de leur conception respective, notamment en ce qui concerne leur section.

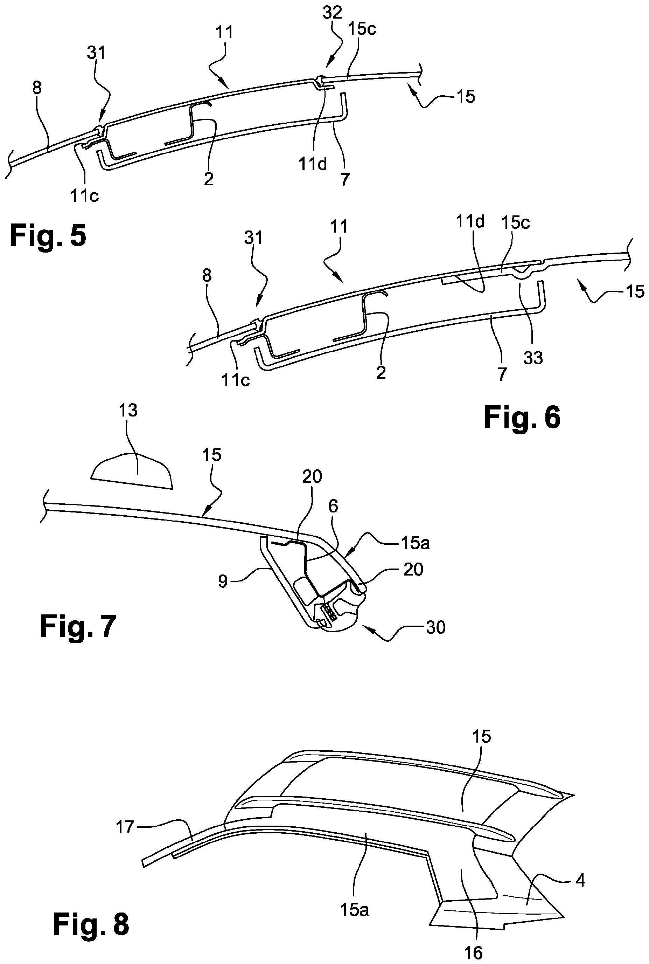

Avantageusement, chacun des brancards latéraux 6 a une section réduite comparativement auxdits brancards latéraux traditionnels, et assujettie à la section des brancards déportés 13. A titre d'exemple, un tel brancard déporté 13 est de section fermée polygonale tandis que le brancard latéral 6 est sensiblement de forme en L avec des parties d'extrémités formant des brides de fixation 20, comme cela est rendu visible sur la figure 7.

Le pavillon structurel 1 de l'invention est ainsi formé des pièces avant 11 et arrière 12 de carrosserie et des brancards déportés 13 définissant ainsi un cadre structurel additionnel, qui est du type d'un ensemble modulaire, qui est rapporté d'un seul tenant sur le cadre supérieur formé des traverses avant 2 et arrière 3 et des brancards latéraux 6.

Selon un mode de réalisation du pavillon structurel, la liaison entre le brancard déporté 13 et les pièces avant 11 et arrière 12 de carrosserie, s'effectue via des platines 14 de fixation comportant des brides de fixation de forme complémentaire aux brides de fixation des traverses avant 2 et arrière 3 du cadre supérieur de la structure de caisse.

Les platines 14 de fixation peuvent ainsi être réalisées en acier de sorte qu'elles sont fixées par soudage aux traverses 2 et 3 par une opération de soudage par point.

Les platines 14 de fixation peuvent être réalisées d'un seul tenant avec les brancards déportés 13.

Les platines 14 de fixation peuvent être démontables des brancards 13 déportés via un moyen d'assemblage approprié afin d'avoir une nature de matériau des brancards déportés 13 qui soit différente de celle pour les platines 14 de fixation.

Selon une variante de réalisation, les platines 14 de fixation et les brancards déportés 13 sont réalisés en matériau composite, par exemple en fibre de verre. La liaison entre chaque platine 14 et une traverse avant 2 ou arrière 3 du cadre supérieur peut être réalisée par l'intermédiaire d'un cordon de colle approprié.

Les pièces avant 2 et arrière 3 de carrosserie peuvent être réalisées en aluminium de sorte que leur liaison aux traverses avant 2 et arrière 3 s'effectue via une opération de soudo-brasage. A cet effet, chaque pièce avant 2 ou arrière 3 de carrosserie peut comprendre une ouverture au travers de laquelle s'étend une platine 14. Le contour de l'ouverture peut comprendre un chanfrein tout au plus périphérie dans lequel un cordon de soudure est disposé afin de rendre ce dernier invisible.

Le pavillon structurel 1 est conçu de telle manière qu'il comprend des brides de fixation permettant l'assemblage du pare-brise 8 à la traverse avant 2. A ce titre, la pièce 11 avant de carrosserie comprend une bride avant de fixation 11c présente une surface extérieure contre laquelle sont rapportés le pare-brise 8 et un élément d'étanchéité 31 solidaire de ce dernier. La bride avant de fixation 11c forme ainsi une partie d'un encadrement du pare-brise 8 contre laquelle le pare-brise est collé. La bride avant de fixation 11c délimite également une surface intérieure d'appui contre laquelle la traverse 2 avant est soudée. Un tel arrangement de la pièce avant 11 de carrosserie, du pare-brise 8 et de la traverse 2 est rendu visible sur les vues en coupe longitudinale des figures 5 et 6. Il en va de même de la pièce arrière 12 de carrosserie qui comporte des brides de fixations, l'une étant destinée à la liaison de cette pièce 12 de carrosserie avec la traverse arrière 3.

Les pièces avant 11 et arrière 12 de carrosserie comprennent respectivement des brides de fixation, prenant le repère 11d pour la pièce avant 11 de carrosserie rendue visible sur les figures 5 et 6, sur laquelle est monté en appui un panneau central s'étendant longitudinalement entre lesdites pièces avant 11 et arrière 12 de carrosserie.

Dans notre mode de réalisation, les brides de fixation susmentionnées sont réalisées par emboutissage d'une plaque d'acier utilisée à la fabrication d'une traverse.

Selon une variante de réalisation, de telles brides de fixation sont des pièces rapportées sur la traverse, les brides pouvant être réalisées dans une matière différente à celle de la traverse.

Préférentiellement, le panneau central est un panneau translucide 15 qui peut être réalisé à partir d'une matière plastique tel que par exemple du polycarbonate.

Selon le mode de réalisation de la figure 5, le bord avant 15c du panneau central 15 est monté sur la face extérieure de la bride 11d de la pièce avant 11 de carrosserie. Un cordon de colle non représenté peut assurer la liaison entre le panneau translucide 15 et le pavillon structurel, au niveau de la bride de fixation 11d. L'étanchéité entre le panneau translucide 15 et la pièce avant 11 de carrosserie peut être réalisée au moyen d'un joint d'étanchéité 32 approprié s'étendant linéairement le long d'un axe transversal parallèle à la bride de fixation 11d concernée. Il peut en être de même de l'arrangement du panneau translucide 15 sur la pièce arrière 13 de carrosserie. Dans ce mode de réalisation, le panneau translucide 15 est monté sur les pièces avant 11 et arrière 12 pour former un tout qui sera d'un seul tenant rapporté sur le cadre supérieur de caisse.

Selon une variante de réalisation visible sur la figure 6, la partie d'extrémité avant du panneau translucide 15 s'étend sous le pavillon structurel, plus particulièrement sous la bride 11d de fixation de la pièce avant 11 de carrosserie. Avantageusement, un tel arrangement peut permettre de s'affranchir d'un joint d'étanchéité. Toutefois, la partie d'extrémité avant du panneau translucide 15 peut comprend une rainure 33 s'étendant linéairement le long d'un axe transversal, sous la zone d'appui de la bride de fixation 11d, et débouchant latéralement hors du véhicule. Une telle rainure 33 permet avantageusement de former une gouttière destinée à l'écoulement de l'eau vers les bords latéraux du pavillon structurel 1. L'assemblage de l'extrémité avant 15c du panneau translucide 15 et de la pièce avant 11 de carrosserie avec la pièce avant 11 de carrosserie définit une conduite s'étendant transversalement au pavillon structurel 1, dont les extrémités débouchent de chaque côté latéral. Il peut en être de même de l'arrangement du panneau translucide 15 sur la pièce arrière 12 de carrosserie. Dans ce mode de réalisation, le panneau translucide 15 peut être en premier lieu monté sur le cadre supérieur de caisse, avant d'être coiffé au niveau de ces extrémités avant et arrière par les pièces avant 11 et arrière 12 de carrosserie.

Selon une variante du procédé d'assemblage, le panneau translucide 15 est fixé sous les pièces avant 11 et arrière 12 de carrosserie avant d'être rapporté d'un seul tenant sur le cadre supérieur du véhicule.

Il n'en demeure pas moins que le pavillon structurel 1, comportant ou non le panneau translucide 15, peut être réalisé indépendamment du cadre supérieur.

Les traverses avant 2 et arrière 3 ainsi que les pièces avant 11 et arrière 13 de carrosserie peuvent être coiffées d'une garniture disposée à l'intérieur du véhicule, comme cela est représenté sur les figures 5 et 6 relatives à la partie avant du pavillon structurel 1.

Le panneau translucide 15 comprend une partie centrale disposée sensiblement longitudinalement entre les pièces avant 11 et arrière 12 de carrosserie, et des bords latéraux 15a droit et gauche tombant.

Comme cela est rendu visible sur la figure 7, une portion inférieure du brancard déporté 13 est espacé verticalement du panneau translucide 15. A titre d'exemple, une telle architecture permet d'utiliser le brancard déporté 13 comme un dispositif de transport et d'arrimage d'objet.

Dans une variante de réalisation, un tel espace peut être réduit de sorte que la portion inférieure du brancard déporté 13 vienne à affleurement du panneau translucide. Cela n'affecte nullement la double fonction des brancards déportés à savoir une fonction portant sur la rigidité de la structure de caisse, du cadre supérieur dans le cas d'espèce, et une fonction de transport d'objet.

Dans un mode de réalisation préféré, lesdits bords latéraux tombant 15a sont de section transversale incurvée vers le bas comme cela est rendu visible sur les figures 1, 2, 4 et 8.

Les bords latéraux tombant 15a peuvent comprendre des sections droites reliées les unes aux autres via une ligne longitudinale de pliure.

Les bords latéraux tombant 15a recouvrent par le dessus les brancards latéraux 6. L'assemblage peut être réalisé par des cordons 20 de colle préalablement disposé le long des brides de fixation des brancards 6 latéraux.

Le côté intérieur des brancards latéraux 6 peut être coiffé d'une garniture intérieur 9, par exemple rapportée collée sur une face intérieur du brancard latéral 6. Le brancard latéral 6 peut en outre comprendre une autre bride de fixation s'étendant entre les brides de fixation 20 du panneau 15, vers le bas, afin de permettre l'assemblage d'un joint 30 d'étanchéité.

Les bords tombant peuvent être localement opacifiés soit par un traitement de la matière, soit par l'ajout d'un film décoratif, soit par tout moyen approprié.

De manière avantageuse, le temps de fabrication du véhicule est réduit. A titre d'exemple, les brancards latéraux 6 étant collés au panneau translucide 15 du pavillon structurel, le temps de ferrage de la structure de caisse est réduit.

Selon le mode de réalisation des figures 2 à 4 et 8, les bords latéraux tombant 15a s'étendent en saillie hors de l'extrémité 15c coopérant avant la pièce avant 11 de carrosserie. De cette manière, les portions de bords latéraux tombant 15a prolongent latéralement chacun des côtés 11a de la pièce avant 11 de carrosserie afin de recouvrir une partie des montants 17 de pare-brise 8.

Selon une variante de réalisation, le panneau translucide 15 peut comprendre des vitres 16 latérales.

Sur la figure 8, la vitre latérale prolongeant vers le bas les bords tombant 15a du panneau translucide 15 est une vitre de custode 16. La vitre de custode 16 peut ainsi être réalisée en matière plastique. Compte tenu du fait que le panneau translucide 15 recouvre en partie la doublure 4 de custode délimitant l'encadrement de vitre de custode, ce dernier peut comprendre des zones opacifiées selon l'une des méthodes susmentionnées.

Dans ce mode de réalisation, les bords latéraux d'extrémité 12a, 12b de la pièce arrière 12 de carrosserie sont montés à affleurement desdites doublures 4 latérales de custode.

Bien entendu, l'invention détaillée précédemment peut également englober d'autres variantes de réalisation, comme par exemple celle consistant en la réalisation d'un panneau translucide 15 avec plusieurs parties contigües et adjacentes longitudinalement, celle consistant en la réalisation par moulage d'un panneau translucide ayant différentes épaisseur de matière et/ou différentes nuances d'opacité.

Un véhicule équipé du pavillon structurel 1 est remarquable en ce qu'il permet de réduire significativement le temps alloué au montage du véhicule tout en allégeant le poids de ce dernier du fait du recours à des matériaux plastiques. Le pavillon structurel 1 contribue en outre à améliorer substantiellement la luminosité à l'intérieur de l'habitacle.

## Revendications

1. Pavillon structurel (1) d'un véhicule du type d'une automobile, comportant au moins une pièce (11) avant de carrosserie et une pièce (12) arrière de carrosserie qui sont aptes à coopérer respectivement avec un cadre supérieur d'une structure de caisse, **caractérisé en ce qu'**au moins l'une desdites pièces (11, 12) avant et arrière de carrosserie est reliée à au moins l'autre d'entre lesdites pièces (11, 12) avant et arrière de carrosserie par l'intermédiaire de deux brancards (13), chacun des brancards étant déporté transversalement d'une distance D d'un bord (11a, 11b, 12a, 12b) latéral desdites pièces (11, 12) de carrosserie vers un bord latéral opposé, de sorte que le pavillon structurel (1) forme un ensemble modulaire apte à être rapporté d'un seul tenant sur le cadre supérieur d'une structure de caisse.

2. Pavillon structurel (1) selon la revendication 1, **caractérisé en ce que** chacune des première et seconde pièces (11, 12) de carrosserie comprend au moins une embase (14) de fixation reliée à au moins un brancard (13) déporté.

3. Pavillon structurel (1) selon la revendication 1, **caractérisé en ce qu'**il est réalisé en matériau composite de sorte que l'ensemble modulaire est venu de matière d'un seul tenant par moulage.

4. Pavillon structurel (1) selon l'une quelconque des revendications 1 à 3, **caractérisé en ce qu'**il comprend un panneau (15) translucide au moins en tout ou partie, s'étendant longitudinalement entre lesdites première et seconde pièces (11, 12) de carrosserie.

5. Pavillon structurel (1) selon la revendication 4, **caractérisé en ce que** le panneau (15) est réalisé en matière plastique.

6. Pavillon structurel (1) selon la revendication 4 ou 5, **caractérisé en ce que** chacune des première et seconde pièces (11, 12) de carrosserie comprend une bride de fixation (11d) contre laquelle le panneau (15) translucide vient en appui.

7. Pavillon structurel (1) selon l'une quelconque des revendications 4 à 6, **caractérisé en ce que** le panneau (15) translucide comprend des bords (15a) tombant incurvés et conformés afin de recouvrir lesdits brancards (6) latéraux de pavillon.

8. Pavillon structurel (1) selon la revendication 7, **caractérisé en ce que** le panneau (15) translucide comprend au moins une vitre (16) latérale prolongeant les bords (15a) tombant.

9. Pavillon structurel (1) selon la revendication 8, **caractérisé en ce que** la vitre (16) est une vitre de custode arrière.

10. Véhicule du type d'une automobile, **caractérisé en ce qu'**il comprend une structure de caisse définissant un cadre supérieur de toit sur lequel un pavillon structurel (1) conforme à l'une quelconque des revendications 1 à 8 est monté.

11. Véhicule du type d'une automobile, **caractérisé en ce que** le cadre supérieur de toit comprend au moins une traverse (2, 3) avant ou arrière de pavillon contre laquelle au moins l'une d'entre les première et seconde pièces (11, 12) de carrosserie est fixée par soudage.

12. Véhicule selon la revendication 10 ou 11, **caractérisé en ce que** le cadre supérieur de toit comprend au moins des brancards (6) latéraux, lesdits brancards (6) latéraux comportant au moins une bride de fixation contre laquelle le panneau (15) est fixé par un cordon de colle de telle manière que le panneau (15) vient à recouvrement par l'extérieur de chacun des brancards (6) latéraux.

13. Véhicule selon l'une quelconque des revendications 10 à 12, **caractérisé en ce que** le cadre supérieur de toit comprend au moins des pièces (4) latérales de carrosserie formant un côté de caisse délimitant un encadrement de vitre recouvert par le panneau (15).

14. Véhicule selon la revendication 13, **caractérisé en ce que** le cadre supérieur de toit comprend au moins un renfort (5) de custode, reliant le côté de caisse (4) à la traverse (3) arrière de pavillon, ledit renfort de custode étant recouvert par le pavillon structurel (1).

15. Véhicule selon la revendication 13, **caractérisé en ce qu'**il comprend un montant (17) latéral de pare-brise (8) prolongeant longitudinalement vers l'avant le brancard (6) latéral de pavillon, le montant (17) latéral étant recouvert en partie par un bord (15a, 15b) tombant dudit panneau (15).

## Patentansprüche

1. Strukturdach (1) eines Fahrzeugs vom Typ eines Kraftfahrzeugs, aufweisend mindestens ein vorderes Karosserieteil (11) und ein hinteres Karosserieteil (12), die jeweils imstande sind, jeweils mit einem oberen Rahmen einer Kastenstruktur zusammenzuwirken, **dadurch gekennzeichnet, dass** mindestens eins von dem vorderen und hinteren Karosserieteil (11, 12) mit mindestens dem anderen von dem vorderen und hinteren Karosserieteil (11, 12) durch zwei Träger (13) verbunden ist, wobei jeder der Träger in einem Abstand D von einem Seitenrand (11a, 11b, 12a, 12b) der Karosserieteile (11, 12) zu einem gegenüberliegenden Seitenrand derart transversal versetzt ist, dass das Strukturdach (1) eine modulare Einheit bildet, die imstande ist, zusammenhängend auf dem oberen Rahmen einer Kastenstruktur angebracht zu sein.

2. Strukturdach (1) nach Anspruch 1, **dadurch gekennzeichnet, dass** jedes von dem ersten und zweiten Karosserieteil (11, 12) mindestens eine Befestigungsgrundplatte (14) umfasst, die mit mindestens einem versetzten Träger (13) verbunden ist.

3. Strukturdach (1) nach Anspruch 1, **dadurch gekennzeichnet, dass** es aus Kompositmaterial derart hergestellt ist, dass die modulare Einheit zusammenhängend einstückig geformt ist.

4. Strukturdach (1) nach einem der Ansprüche 1 bis 3, **dadurch gekennzeichnet, dass** es eine mindestens ganz oder teilweise durchscheinende Platte (15) umfasst, die sich längs zwischen dem ersten und zweiten Karosserieteil (11, 12) erstreckt.

5. Strukturdach (1) nach Anspruch 4, **dadurch gekennzeichnet, dass** die Platte (15) aus Kunststoff hergestellt ist.

6. Strukturdach (1) nach Anspruch 4 oder 5, **dadurch gekennzeichnet, dass** jedes von dem ersten und zweiten Karosserieteil (11, 12) einen Befestigungsflansch (11d) umfasst, auf dem sich die durchscheinende Platte (15) abstützt.

7. Strukturdach (1) nach einem der Ansprüche 4 bis 6, **dadurch gekennzeichnet, dass** die durchscheinende Platte (15) fallende Ränder (15a) umfasst, die gekrümmt sind und ausgebildet, um die seitlichen Dachträger (6) abzudecken.

8. Strukturdach (1) nach Anspruch 7, **dadurch gekennzeichnet, dass** die durchscheinende Platte (15) mindestens eine seitliche Scheibe (16) umfasst, die die fallenden Ränder (15a) verlängert.

9. Strukturdach (1) nach Anspruch 8, **dadurch gekennzeichnet, dass** die Scheibe (16) eine Heckseitenscheibe ist.

10. Fahrzeug vom Typ eines Kraftfahrzeugs, **dadurch gekennzeichnet, dass** es eine Kastenstruktur umfasst, die einen oberen Dachrahmen definiert, auf dem ein Strukturdach (1) nach einem der Ansprüche 1 bis 8 angebracht ist.

11. Fahrzeug vom Typ eines Kraftfahrzeugs, **dadurch gekennzeichnet, dass** der obere Dachrahmen mindestens einen vorderen oder hinteren Dachquerträger (2, 3) umfasst, auf dem mindestens eins von dem ersten und zweiten Karosserieteil (11, 12) durch Schweißen befestigt ist.

12. Fahrzeug nach Anspruch 10 oder 11, **dadurch gekennzeichnet, dass** der obere Dachrahmen mindestens seitliche Träger (6) umfasst, wobei die seitlichen Träger (6) mindestens einen Befestigungsflansch aufweisen, an dem die Platte (15) durch einen Klebstoffstrang derart befestigt ist, dass die Platte (15) jeden der seitlichen Träger (6) von außen abdeckt.

13. Fahrzeug nach einem der Ansprüche 10 bis 12, **dadurch gekennzeichnet, dass** der obere Dachrahmen mindestens seitliche Karosserieteile (4) umfasst, die eine Kastenseite bilden, die eine von der Platte (15) abgedeckte Scheibeneinrahmung begrenzt.

14. Fahrzeug nach Anspruch 13, **dadurch gekennzeichnet, dass** der obere Dachrahmen mindestens eine Heckseitenscheibenverstärkung (5) umfasst, welche die Kastenseite (4) mit dem hinteren Dachquerträger (3) verbindet, wobei die Heckseitenscheibenverstärkung von dem Strukturdach (1) abgedeckt ist.

15. Fahrzeug nach Anspruch 13, **dadurch gekennzeichnet, dass** es einen seitlichen Pfosten (17) einer Windschutzscheibe (8) umfasst, welcher den seitlichen Dachträger (6) längs nach vorn verlängert, wobei der seitliche Pfosten (17) teilweise durch einen fallenden Rand (15a, 15b) der Platte (15) abgedeckt ist.

## Claims

1. Structural roof (1) of a motor car vehicle, including at least one front bodywork part (11) and one rear bodywork part (12) that are designed to engage respectively with an upper frame of a body structure, **characterized in that** at least one of said front and rear bodywork parts (11, 12) is connected to at least the other one of said front and rear bodywork parts (11, 12) via two side rails (13), each of the side rails being offset transversely by a distance D from a lateral edge (11a, 11b, 12a, 12b) of said bodywork parts (11, 12) towards an opposing lateral edge so that the structural roof (1) forms a modular assembly capable of being added as a single part to the upper frame of a body structure.

2. Structural roof (1) according to Claim 1, **characterized in that** each of the first and second bodywork parts (11, 12) includes at least one attachment base (14) linked to at least one offset side rail (13).

3. Structural roof (1) according to Claim 1, **characterized in that** it is made of a composite material such that the modular assembly is integrally formed as a single part by molding.

4. Structural roof (1) according to any one of Claims 1 to 3, **characterized in that** it includes a panel (15) that is entirely or at least partially translucent and that extends longitudinally between said first and second bodywork parts (11, 12).

5. Structural roof (1) according to Claim 4, **characterized in that** the panel (15) is made of plastic.

6. Structural roof (1) according to Claim 4 or 5, **characterized in that** each of the first and second bodywork parts (11, 12) includes a coupling flange (11d) against which the translucent panel (15) bears.

7. Structural roof (1) according to any one of Claims 4 to 6, **characterized in that** the translucent panel (15) includes curved dropped edges (15a) shaped to cover said side roof rails (6).

8. Structural roof (1) according to Claim 7, **characterized in that** the translucent panel (15) includes at least one side window (16) extending the dropped edges (15a) .

9. Structural roof (1) according to Claim 8, **characterized in that** the window (16) is a rear quarter panel window.

10. Motor car vehicle, **characterized in that** it includes a body structure defining an upper roof frame on which a structural roof (1) according to any one of Claims 1 to 8 is mounted.

11. Motor car vehicle, **characterized in that** the upper roof frame includes at least one front or rear roof cross member (2, 3) to which at least one of the first and second bodywork parts (11, 12) is attached by welding.

12. Vehicle according to Claim 10 or 11, **characterized in that** the upper roof frame includes at least side rails (6), said side rails (6) including at least one coupling flange to which the panel (15) is attached by a glue bead such that the panel (15) covers each of the side rails (6) on the outside.

13. Vehicle according to any one of Claims 10 to 12, **characterized in that** the upper roof frame includes at least lateral bodywork parts (4) forming a body side delimiting a window frame covered by the panel (15).

14. Vehicle according to Claim 13, **characterized in that** the upper roof frame includes at least one quarter panel reinforcement (5) linking the body side (4) to the rear roof cross member (3), said quarter panel reinforcement being covered by the structural roof (1).

15. Vehicle according to Claim 13, **characterized in that** it includes a side pillar (17) of the windscreen (8) extending the side roof rail (6) longitudinally forwards, the side pillar (17) being covered in part by a dropped edge (15a, 15b) of said panel (15).
